# EUROPÄISCHE PATENTSCHRIFT

(11) **EP 4 420 585 B1**
(45) Veröffentlichungstag und Bekanntmachung des Hinweises auf die Patenterteilung: **11.03.2026**
(21) Anmeldenummer: 24153681.2
(22) Anmeldetag: 24.01.2024
(51) Int. Cl.: A47L 9/28, G05D 105/10

(54) **BESTIMMUNG EINES ZUSTANDS EINES FENSTERS ODER EINER TÜR IN EINEM HAUSHALT**
DETERMINING A CONDITION OF A WINDOW OR DOOR IN A HOUSEHOLD
DÉTERMINATION D'UN ÉTAT D'UNE FENÊTRE OU D'UNE PORTE DANS UN FOYER

(30) Priorität: 22.02.2023 DE 102023201628
(43) Veröffentlichungstag der Anmeldung: 28.08.2024
(73) Patentinhaber: BSH Hausgeräte GmbH, 81739 München (DE)
(72) Erfinder: Daniel, Kristina, 97616 Bad Neustadt (DE); Schnitzer, Frank, 97616 Bad Neustadt (DE); Wittkowski, Josephine, 83278 Traunstein (DE)

(56) Entgegenhaltungen:
- CN-A- 111 950 440
- CN-A- 113 341 752
- US-A1- 2014 207 280

## Beschreibung

Die Erfindung betrifft die Überwachung eines Haushalts. Insbesondere betrifft die Erfindung die Bestimmung eines Zustands eines Fensters oder einer Tür in dem Haushalt.

Ein Bodenroboter ist dazu eingerichtet, eine Bodenfläche in einem Haushalt zu bearbeiten. Dabei kann der Bodenroboter autonom im Haushalt navigieren und im Rahmen seiner Tätigkeit praktisch den gesamten Haushalt abfahren.

Es wurde vorgeschlagen, den Bodenroboter für eine Überwachung des Haushalts zu verwenden, beispielsweise um ein Alarmsystem zu ersetzen oder zu verbessern. Beispielsweise kann der Bodenroboter einen pyrotechnischen Sensor oder einen Rauchsensor umfassen, um vor einer drohenden Feuergefahr zu warnen, einen LiDAR-Bewegungssensor oder einen passiven Infrarotsensor, um eine Person im Haushalt zu erkennen.

US 2014 / 0207280 A1 oder CN 113 341 752 A schlägt ein System zur Raumüberwachung vor. Das System umfasst einen mobilen Roboter, der dazu eingesetzt werden kann, eine offene Tür oder ein offenes Fenster zu bestimmen.

Der Bodenroboter ist üblicherweise auf eine Operation in Bodennähe eingeschränkt. Die Erkennung eines offenen Fensters oder einer offenen Tür kann durch die Perspektive, einen im Blickfeld befindlichen Gegenstand wie ein Möbel, ein Haustier oder eine Person erschwert sein. Das Fenster kann teilweise oder vollständig hinter einem Vorhang liegen und auf einem Fensterbrett können Gegenstände wie Topfpflanzen oder Bücher liegen. Das Fenster oder die Tür kann von einer Wand begrenzt sein, an der ein Gegenstand wie eine Tapete, ein Bild oder ein Poster angebracht sein kann. Auch auf dem Fenster oder auf der Tür selbst kann ein Gegenstand angebracht sein, an einem Fenster etwa ein transluzentes Bild oder ein Thermometer; an einer Tür beispielsweise ein Aufkleber oder eine Beschriftung.

Es kann außerdem schwierig sein, ein Fenster oder eine Tür in einem Haushalt korrekt zu erkennen. Beispielsweise kann eine Tür ein eingelassenes Fenster umfassen oder ein Fenster kann nach Art einer Tür geöffnet werden. Eine Durchreiche kann nicht als Tür oder Fenster zählen, auch wenn sie geöffnet und geschlossen werden kann und Gegenstände durch sie hindurch passiert werden können. Ein transparentes Oberlicht über einer Tür kann nicht geöffnet werden und muss daher nicht überwacht werden, ein Oberlicht in einem Flachdach hingegen kann als zu überwachendes Fenster angesehen werden. Eine Schiebetür kann im geöffneten Zustand nicht als solche erkennbar sein. Eine Fensterscheibe kann abgedeckt sein, sodass ein Fenster schwer zu erkennen sein kann.

Eine der vorliegenden Erfindung zu Grunde liegende Aufgabe besteht in der Angabe einer verbesserten Technik zur Bestimmung eines Zustands eines Zugangselements in einem Haushalt. Die Erfindung löst diese Aufgabe mittels der Gegenstände der unabhängigen Ansprüche. Unteransprüche geben bevorzugte Ausführungsformen wieder.

Ein individuelles Zugangselement zu einem Raum in einem Haushalt kann in einen offenen und in einen geschlossenen Zustand gebracht werden. Ein Verfahren zum Erkennen eines individuellen Zustands des Zugangselements umfasst Schritte des Bestimmens einer Position, an der sich ein individuelles Zugangselement im Haushalt befindet; des berührungslosen Abtastens des individuellen Zugangselements, während es sich in einem vorbestimmten Zustand befindet; des Ablegens von Informationen zum individuellen Zugangselement auf der Basis seiner Abtastung und seines Zustands; des Erfassens einer weiteren berührungslosen Abtastung des individuellen Zugangselements im Haushalt; und des Erkennens eines Zustands des individuellen Zugangselements auf der Basis der weiteren berührungslos Abtastung sowie der abgelegten und der vorbestimmten Informationen.

Es wurde erkannt, dass eine übliche Technik zur Erkennung eines allgemeinen Zugangselements oder zur Bestimmung dessen Zustands durch ein zusätzliches Training anhand von Abtastungen eines individuellen Zugangselements in einem vorbestimmten Haushalt in seiner Erkennungsleistung entscheidend verbessert werden kann. Ein Großteil von Vorarbeiten, die zur Erkennung eines generischen Zugangselements oder seines Zustands erforderlich sind, kann zentral und unter Verwendung gesammelter oder generierter Daten erfolgen. Das zusätzliche Erfassen von Informationen über das individuelle Zugangselement kann nur einen geringen Aufwand erfordern und außerdem zumindest teilweise automatisch erfolgen.

So kann eine bekannte und etablierte Technik zur Objekt- oder Merkmalserkennung vorteilhaft verwendet werden, ohne in eine damit verbundene Vorbereitungsphase eingreifen zu müssen. Sollten die Informationen zur Erkennung eines generischen Zugangselements oder seines Zustands aktualisiert werden, so können zusätzlich bestimmte Informationen bezüglich des individuellen Zugangselements beibehalten werden.

Das Zugangselement umfasst bevorzugt eine Tür oder ein Fenster. Allgemein kann das Zugangselement ein beliebiges bauliches Element umfassen, das eine Öffnung verschließen kann, durch die eine Person in den Haushalt oder in einen Raum des Haushalts eindringen kann. Das Zugangselement kann auch beispielsweise eine Schiebetür, eine Doppeltür, ein Tor, eine Falttür, eine Falltür, eine Drehtür, eine Tapetentür, ein Schwingfenster, ein Kippfenster oder ein Lukenfenster umfassen. Das Fenster kann rechteckig sein oder eine davon abweichende Form aufweisen, beispielsweise rund, dreieckig oder oval.

Es ist zu beachten, dass ein Zugangselement in mehrere Zustände gebracht werden kann, die unterschiedliche Grade der Behinderung einer eindringenden Person realisieren können. Beispielsweise kann das Zugangselement in unterschiedlichen Zuständen vollständig geöffnet; teilweise geöffnet; angelehnt; gekippt; geschlossen; eingerastet oder verriegelt sein. Manche Zugangselemente können auch davon abweichende Zustände einnehmen. Ab wann der Zustand als geschlossen oder eben als nicht geschlossen gelten soll, kann individuell per Zugangselement definiert werden. Die Definition kann für alle Zugangselemente eines Raums oder des Haushalts oder nur für ein individuelles Zugangselement gelten. In einer Ausführungsform kann das individuelle Zugangselement als geschlossen gelten, falls es von einer Person von außen nicht ohne Werkzeug oder die Anwendung von Gewalt geöffnet werden kann. Ein anderes Beispiel für eine Ausführungsform wäre ein gekipptes Fenster, durch das zwar niemand einsteigen kann, durch das bei Starkregen jedoch Nässe eindringen könnte.

In einer bevorzugten Ausführungsform wird die Position des Zugangselements durch einen Benutzer oder eine dem Haushalt zugeordnete Person angegeben. Optional kann zusätzlich zum bestimmten Zustand auch angegeben werden, mit welcher Sicherheit der Zustand erkannt wurde. Eine beispielhafte Meldung könnte lauten: "Das Küchenfenster ist vollständig offen (mit 95% Sicherheit erkannt)". Dabei können auch Positionen mehrerer Zugangselemente angegeben werden, die nachfolgend einander entsprechend weiterverarbeitet werden können. Eine Auswahl, an welcher Position ein Zugangselement liegt und an welcher nicht, kann implizit durch die Person erfolgen, sodass eine automatische Unterscheidung nicht erforderlich sein kann.

Das Zugangselement kann mittels eines automatischen Bodenroboters abgetastet werden. Der Bodenroboter ist üblicherweise dazu eingerichtet, über eine Bodenfläche im Haushalt zu fahren und optional ferner dazu, diese trocken oder feucht zu reinigen. Dabei kann der Bodenroboter autonom gesteuert werden. Außerdem kann der Bodenroboter durch den Haushalt gesteuert werden, um im Rahmen einer hierin vorgestellten Technik eine vorbestimmte Position einzunehmen oder einen vorbestimmten Pfad abzufahren.

Die weitere Abtastung kann im Rahmen einer Reinigung einer Bodenfläche im Haushalt erfasst werden. So kann der Bodenroboter zusätzlich zu seiner Primäraufgabe der Bodenreinigung vorteilhaft zur Erfassung des Zustands des Zugangselements eingesetzt werden. Unabhängig davon kann auch eine Anfrage oder Aufforderung zur Abtastung erfasst werden und die Abtastung kann in Antwort darauf angefertigt werden. Beispielsweise kann eine Ereignis-, Zeit- oder Benutzergesteuerte Anforderung erfolgen und der Bodenroboter kann entsprechend darauf reagieren. Eine gerade stattfindende Bodenreinigung kann für eine Abtastung unterbrochen werden, um eine rasche Rückmeldung über den Zustand des Zugangselements bereitstellen zu können.

In einer weiteren Ausführungsform kann ein bestimmter Zustand eines individuellen Zugangselements im Haushalt an eine Person außerhalb des Haushalts bereitgestellt werden. Freilich können auch Zustände mehrerer Zugangselemente bestimmt und der Person zugänglich gemacht werden. So kann die Person leicht entscheiden, ob sie den Haushalt in einem ausreichend sicheren Zustand verlassen hat. Mehrere bestimmte Zustände können auch automatisch zusammengefasst werden, sodass die Person beispielsweise zusammenfassend darüber informiert werden kann, dass entweder alle oder eben nicht alle Zugangselemente des Raums oder des Haushalts geschlossen sind.

Auf der Basis der Position des individuellen Zugangselements kann eine Abtastposition bestimmt werden, von der aus die Abtastung erfolgt. Optional kann auch eine vorteilhafte Ausrichtung des Bodenroboters bezüglich des individuellen Zugangselements bestimmt werden. In einer bevorzugten Ausführungsform ist die Position des Zugangselements bezüglich einer Umgebungskarte des Raums oder des Haushalts bestimmt. Dabei kann ein Hindernis oder eine Raumbegrenzung berücksichtigt werden, sodass nur eine einnehmbare und bevorzugt aufschlussreiche Abtastposition bestimmt werden kann.

Bezüglich der Position können mehrere Abtastpositionen bestimmt werden, von denen aus unterschiedliche Perspektiven auf das Zugangselement bestehen, sodass das Zugangselement umfassend abgetastet werden kann. Die Abtastpositionen können auch unterschiedliche Lichtverhältnisse aufweisen, beispielsweise Gegenlicht, Tageslicht oder Kunstlicht. Die Lichtverhältnisse können von einer aktuellen Zeit abhängig sein, wobei eine Abtastposition auch in Abhängigkeit der Zeit gewählt werden kann. So kann die Bestimmung des Zustands des individuellen Zugangselements verbessert umfassend erlernt werden.

Die Informationen zum individuellen Zugangselement können separat von den Informationen zur Erkennung eines generischen Zugangselements oder seines Zustands abgelegt werden. Dabei können die Informationen unterschiedliche Formate aufweisen. Beispielsweise können die Informationen zur Erkennung eines generischen Zugangselements oder seines Zustands vorverarbeitet und kompakt abgespeichert sein. Informationen zum individuellen Zugangselement können hingegen in einem weniger stark verarbeiteten Format abgelegt sein. In einer Ausführungsform können Rohdaten oder unverarbeitete, aber komprimierte Daten abgelegt sein, sodass eine spätere Weiterverarbeitung oder Kontrolle leichter möglich ist.

In einer Ausführungsform wird eine Verknüpfung zwischen den Informationen über das individuelle Zugangselement und den Informationen über generische Zugangselemente hergestellt. Beispielsweise kann bestimmt werden, wo am individuellen Zugangselement ein Handhebel angeordnet ist und der Handhebel kann derart mit den generischen Informationen verknüpft werden, dass eine Stellung des Handhebels verbessert erkannt werden kann. In einer anderen Ausführungsform kann eine Stellung des Handhebels am individuellen Zugangselement bestimmt und aufgrund der Verknüpfung mit Stellungen generischer Zugangselemente verglichen werden, um aus der Stellung einen Zustand abzuleiten.

Informationen, die unterschiedlichen individuellen Zugangselementen im Haushalt zugeordnet sind, können separat voneinander gespeichert werden. In einer Ausführungsform ist jedem Satz von Informationen, der einem individuellen Zugangselement zugeordnet ist, ein eigener Speicherbereich, eine eigene Datenbank oder ein eigenes Modell zugeordnet.

Die Informationen zur Erkennung eines generischen Zugangselements oder seines Zustands können als trainiertes künstliches neuronales Netzwerk (KNN) vorliegen. Die abgelegten Informationen zum individuellen Zugangselement können ebenfalls als KNN vorliegen oder auch als Rohdaten, als Bild, als Extrakt (digest), oder als Verknüpfung zu Informationen über ein generisches Zugangselement.

Es ist zu beachten, dass die zur Erkennung generischer Objekte hinterlegten Informationen nicht auf Zugangselemente beschränkt sein müssen. In einer Ausführungsform können solche Informationen auch zur Erkennung anderer Objekte eingerichtet sein, die in einem Haushalt anzutreffen sind, beispielsweise ein Möbel, ein Haustier oder ein auf der Bodenfläche liegendes Hindernis, etwa ein Kabel oder ein Teppich.

Der Bodenroboter kann dazu angesteuert werden, das individuelle Zugangselement in den geschlossenen Zustand zu bringen, nachdem bestimmt wurde, dass dessen Zustand nicht geschlossen ist. Der Bodenroboter kann hierzu beispielsweise in einem bestimmten Winkel auf eine offenstehende, in den Raum hineinragende Tür zufahren und diese Richtung Türrahmen schieben bis sie zuschnappt. Dies kann insbesondere für ein individuelles Zugangselement gelten, das sich bin in die Nähe einer Bodenfläche erstreckt, auf welcher der Bodenroboter fährt. Einem individuellen Zugangselement kann eine Information zugeordnet sein, ob ein Schließen gewünscht (oder möglich) ist oder nicht. So kann eine Verbindungstür zwischen zwei Räumen des Haushalts offen stehen bleiben, eine Balkontür hingegen nach Möglichkeit geschlossen werden. Durch das Schließen des Zugangselements kann nicht nur die Gefahr eines unerwünschten Eindringens einer Person verringert werden, sondern auch ein Eindringen eines unerwünschten äußeren Einflusses, etwa Regen.

Nach einem weiteren Aspekt der vorliegenden Erfindung umfasst ein Bodenroboter eine Einrichtung zur Bestimmung einer Position, an der sich ein individuelles Zugangselement im Haushalt befindet; wobei das individuelle Zugangselement in einen offenen und in einen geschlossenen Zustand gebracht werden kann; eine Abtasteinrichtung zur berührungslosen Abtastung des individuellen Zugangselements, während es sich in einem vorbestimmten Zustand befindet; einen ersten Speicher mit vorbestimmten Informationen zur Erkennung eines generischen Zugangselements oder seines Zustands; einen zweiten Speicher zur Ablage von Informationen zum individuellen Zugangselements auf der Basis seiner Abtastung und seines Zustands; und eine Verarbeitungseinrichtung, die dazu eingerichtet ist, einen Zustand des individuellen Zugangselements im Haushalt auf der Basis einer weiteren berührungslosen Abtastung und den vorbestimmten sowie den abgelegten Informationen zu erkennen.

Die Verarbeitungseinrichtung kann dazu eingerichtet sein, ein hierin beschriebenes Verfahren ganz oder teilweise auszuführen. Dazu kann die Verarbeitungseinrichtung elektronisch ausgeführt sein und beispielsweise einen programmierbaren Mikrocomputer oder Mikrocontroller umfassen und das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile des Verfahrens können auf die Vorrichtung übertragen werden oder umgekehrt.

Der Bodenroboter kann dazu eingerichtet sein, eine Bodenfläche im Haushalt zu bearbeiten; und die weitere Abtastung des individuellen Zugangselements im Rahmen einer Bearbeitung der Bodenfläche zu erfassen. Die Bearbeitung kann insbesondere eine Reinigung der Bodenfläche umfassen. Die Reinigung kann trocken erfolgen und beispielsweise ein Staubsaugen oder Fegen umfassen, oder feucht, unter Einsatz einer Reinigungsflüssigkeit, und beispielsweise ein Wischen oder ein feuchtes Abziehen betreffen.

Nach abermals einem weiteren Aspekt der vorliegenden Erfindung umfasst ein System einen hierin beschriebenen Bodenroboter und eine drahtlos mit der Verarbeitungseinrichtung gekoppelte Interaktionseinrichtung für einen Benutzer. Die Interaktionseinrichtung kann insbesondere ein dem Benutzer zugeordnetes Gerät wie ein Smartphone, einen Laptop Computer oder einen Tablet Computer umfassen. Eine andere Interaktion, beispielsweise mittels Sprachsteuerung, kann ebenfalls möglich sein. Mittels der Interaktionseinrichtung kann eine kooperative oder interaktive Abtastung eines individuellen Zugangselements durchgeführt werden. Ein Benutzer kann für einen vorbestimmten Zustand des Zugangselements sorgen oder eine Position eines Zugangselements angeben. Die Interaktionseinrichtung ist bevorzugt zur grafischen Ausgabe von Informationen fähig, sodass Informationen bezüglich einer grafischen Darstellung des Haushalts gegeben werden können. Die grafische Darstellung kann auf der Basis von Kartendaten bestimmt sein, die der Bodenroboter gesammelt oder bereitgestellt bekommen hat.

Die Erfindung wird nun unter Bezug auf die beiliegenden Figuren genauer beschrieben, in denen:
- Figur 1: einen Bodenroboter in einem Haushalt;
- Figur 2: ein Ablaufdiagramm eines Verfahrens;
- Figur 3: beispielhafte Abtastungen einer individuellen Tür in einem Haushalt; und
- Figur 4: beispielhafte Abtastpositionen in einem Haushalt und Abtastungen einer individuellen Tür in dem Haushalt aus unterschiedlichen Abtastpositionen darstellen.

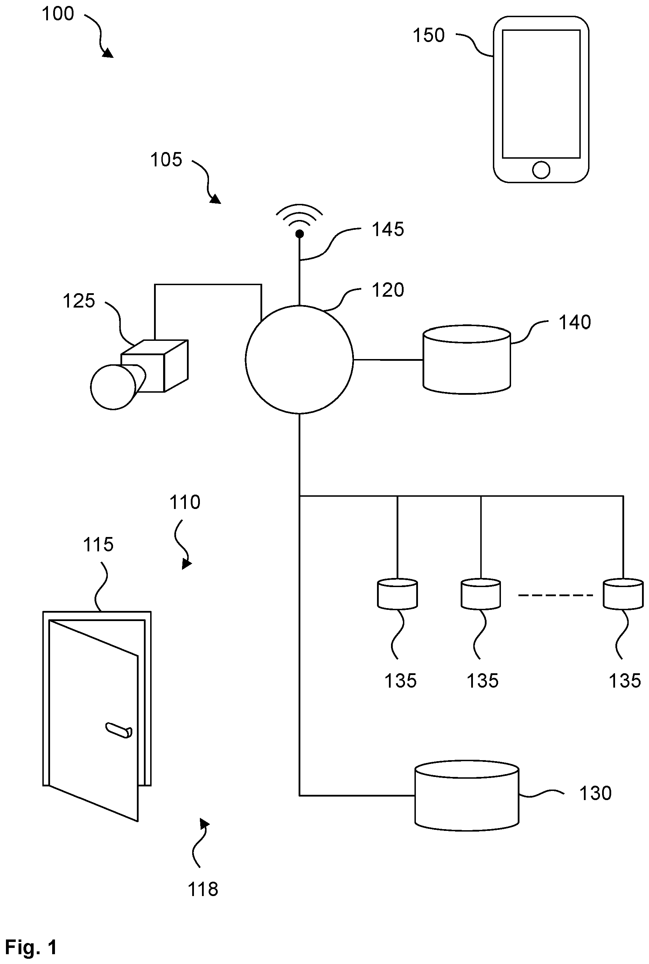

Figur 1 zeigt ein System 100 mit einem Bodenroboter 105 in einem Haushalt 110. Der Haushalt 110 umfasst üblicherweise wenigstens einen Raum, der durch ein Zugangselement 115 abgegrenzt werden kann. Das Zugangselement 115 umfasst üblicherweise eine Tür oder ein Fenster und kann in verschiedene Zustände gebracht werden, die einen Durchtritt ermöglichen oder verhindern können. Im Haushalt 110 befindet sich eine Bodenfläche 118, auf welcher der Bodenroboter 105 fahren kann. Bevorzugt ist der Bodenroboter 105 dazu eingerichtet, die Bodenfläche 118 zu bearbeiten und insbesondere zu reinigen. Elemente des Bodenroboters 105 zur Fortbewegung und zur Bearbeitung der Bodenfläche 118 sind in Figur 1 nicht dargestellt.

Der Bodenroboter 105 umfasst bevorzugt eine Verarbeitungseinrichtung 120 und einen Sensor 125 zur berührungslosen und bevorzugt optischen Abtastung eines Umfelds. Der Sensor 125 kann beispielsweise eine Kamera, einen Radarsensor oder einen LiDAR-Sensor umfassen. Darüber hinaus können ein erster Speicher 130 mit Informationen zur Erkennung eines generischen Zugangselements 115 oder seines Zustands sowie weiter bevorzugt ein zweiter Speicher 135 zur Ablage von Informationen zu einem im Haushalt 110 vorhandenen individuellen Zugangselement 115 vorgesehen sein. Es können auch mehrere zweite Speicher 135 oder Speicherbereiche vorgesehen sein, die logisch voneinander getrennt sind, sodass jeweils abgelegte Informationen nicht unkontrolliert miteinander interagieren. Jeder zweite Speicher 135 kann einem eigenen individuellen Zugangselement 115 im Haushalt 110 zugeordnet sein.

Ferner umfasst der Bodenroboter 105 bevorzugt einen Kartenspeicher 140 zur Ablage von Kartendaten über den Haushalt 110. Auf der Basis einer Abtastung seines Umfelds kann der Bodenroboter 105 eine Begrenzung des Haushalts 110, beispielsweise durch eine Wand, oder ein Objekt, beispielsweise ein Möbel, erkennen. Auf dieser Basis können die Kartendaten erstellt bzw. aktualisiert werden. Eine Planung eines zu befahrenen Wegs im Haushalt 110 kann bezüglich der Kartendaten erfolgen.

Eine drahtlose Schnittstelle 145 kann zur Kommunikation mit einer Interaktionseinrichtung 150 vorgesehen sein. Das System 100 kann zusätzlich zum Bodenroboter 105 eine Interaktionseinrichtung 150 umfassen.

Ein generisches Objekt im Haushalt 110 kann auf der Basis einer Abtastung mittels des Sensors 125 bezüglich Informationen des ersten Speichers 130 erkannt werden. Es wird vorgeschlagen, die Erkennung eines im Haushalt 110 anzutreffendes individuelles Zugangselement 115 zusätzlich anzulernen und Informationen über das individuelle Zugangselement 115 im zweiten Speicher 135 abzulegen. Eine Erkennung des individuellen Zugangselements 115 und/oder seines Zustands kann dann auf der Basis der im zweiten Speicher 135 abgelegten Informationen erfolgen. Weiter bevorzugt werden außerdem Informationen des ersten Speichers 130 dazu verwendet.

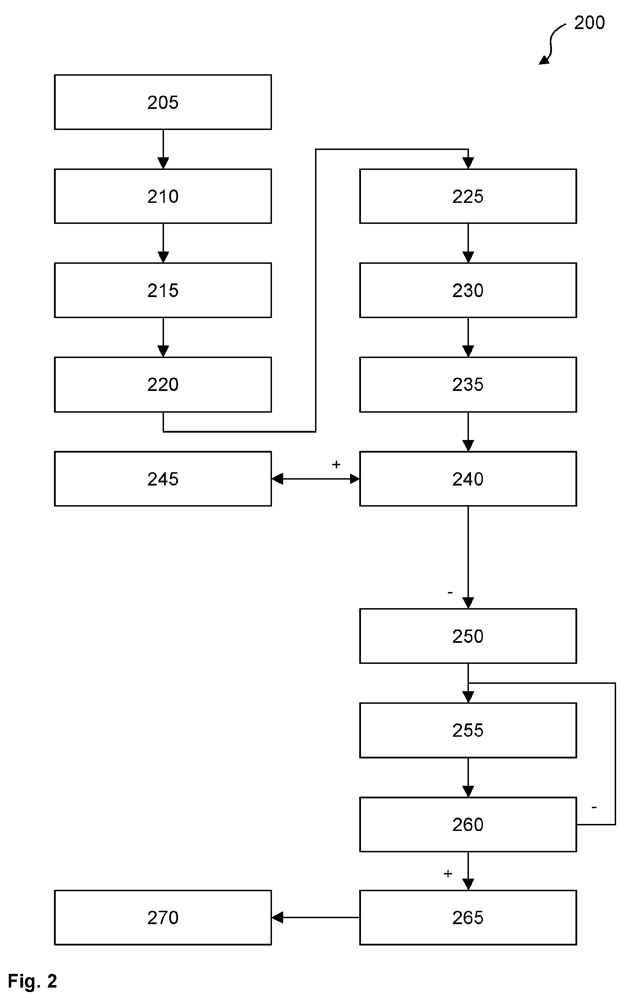

Figur 2 zeigt ein Ablaufdiagramm eines Verfahrens 200, das insbesondere mittels eines Systems 100 ausgeführt werden kann. Das Verfahren 200 umfasst zwei Phasen, die auch als eigenständige Verfahren angesehen werden können. Im Folgenden wird als beispielhaftes Zugangselement 115 ein Fenster behandelt; ein anderes Zugangselement kann in entsprechender Weise behandelt werden.

Eine erste Phase beginnt in einem Schritt 205, in welchem eine Position eines individuellen Fensters 115 angegeben wird. Die Angabe kann durch einen Benutzer erfolgen, beispielsweise mittels der Interaktionseinrichtung 150. Bevorzugt wird dem Benutzer eine grafische Ansicht auf Kartendaten des Haushalts 110 bereitgestellt und der Benutzer kann eine Position auf den Kartendaten für das individuelle Fenster 115 angeben.

In einem Schritt 210 kann das individuelle Fenster 115 in einen vorbestimmten Zustand gebracht werden. Dieser Zustand kann insbesondere einen geschlossenen Zustand kennzeichnen, bei dem ein Durchtritt einer Person oder eines Gegenstands durch das Fenster 115 in den Haushalt 110 verhindert sein kann. Die Person kann gebeten werden, den vorbestimmten Zustand am Fenster 115 einzustellen.

In einem Schritt 215 können eine oder mehrere ersten Abtastpositionen im Bereich der Position des individuellen Fensters 115 bestimmt werden. Die Abtastpositionen können vorteilhafte und unterschiedliche Perspektiven auf das individuelle Fenster 115 erlauben und durch den Bodenroboter 105 auf der Bodenfläche 118 erreichbar sein. Hierbei ist nicht nur die genaue Abtastposition des Roboters relevant, sondern auch die Ausrichtung der fest montierten Kamera in Richtung des Zugangselements sowie die Tageszeit, um zukünftig vergleichbare Lichtverhältnisse ermöglichen zu können.

In einem Schritt 220 kann der Bodenroboter eine Abtastposition anfahren und eine Abtastung des individuellen Fensters 115 anfertigen. Im Fall mehrerer Abtastpositionen können diese nacheinander angefahren werden und es können mehrere Abtastungen angefertigt werden. Die Abtastungen können unverarbeitet oder verarbeitet im zweiten Speicher 135 abgelegt werden. Dabei kann jeweils ein Hinweis auf den vorbestimmten Zustand und/oder der Position beigefügt werden.

Optional kann in einem Schritt 225 das individuelle Fenster 115 in einen zweiten vorbestimmten Zustand gebracht werden, beispielsweise geöffnet, gekippt oder angelehnt. In einem Schritt 230 können eine oder mehrere zweite Abtastpositionen bestimmt werden. Optional können auch die ersten Abtastpositionen erneut verwendet werden. In einem Schritt 235 kann eine zweite Abtastposition angefahren und das individuelle Fenster 115 abgetastet werden. Die Schritte 230 und 235 können den Schritten 215 bzw. 220 entsprechen.

Optional können Schritte 225 bis 235 bezüglich noch eines weiteren Zustands des individuellen Fensters durchgeführt werden. Dieser Vorgang kann für jeden zu erkennenden Zustand wiederholt werden.

In einem Schritt 240 kann bestimmt werden, ob eine weitere Abtastung des individuellen Fensters 115 erforderlich ist. Dies kann der Fall sein, falls die abgelegten Informationen, optional unter Zuhilfenahme der generischen Informationen im ersten Speicher 130, nicht ausreichen, um das individuelle Fenster bzw. seinen Zustand auf der Basis einer weiteren Abtastung zu erkennen. In diesem Fall kann der Benutzer in einem Schritt 245 gebeten werden, für vorbestimmte Verhältnisse zu sorgen, beispielsweise gewisse Lichtverhältnisse oder die Abwesenheit eines Möbels oder eines Wandschmucks im Bereich des individuellen Fensters 115. Dann kann eine weitere Abtastung vorgenommen werden. Eine Abtastposition hierfür kann vorher eingenommen werden. Die Schritte 240, 245 können bei Bedarf auch mehrfach durchlaufen werden, etwa zu unterschiedlichen Tageszeiten bei verschiedenen Lichtverhältnissen.

Sind ausreichend Informationen im zweiten Speicher 135 abgelegt, um eine Erkennung des individuellen Fensters 115 bzw. seines Zustands zu erlauben, kann die erste Phase des Verfahrens 200 beendet sein.

Eine zweite Phase beginnt in einem Schritt 250, in welchem eine Anforderung zur Überprüfung eines Zustands des individuellen Fensters 115 empfangen werden kann. Die Anforderung kann explizit vorliegen und beispielsweise durch einen Benutzer ausgelöst sein, der wissen möchte, in welchem Zustand sich eines oder mehrere Fenster oder Türen 115 des Haushalts 110 befinden. Die Anforderung kann auch beispielsweise zeitgesteuert sein. In noch einer weiteren Ausführungsform ist die Anforderung implizit, indem beispielsweise der Bodenroboter 105 eine Reinigungstätigkeit im Haushalt 110 ausführt und dabei aufgefordert ist, den Zustand des Fensters 115 zu bestimmen.

In einem Schritt 255 kann der Bodenroboter 115 eine Abtastposition im Bereich der Position des individuellen Fensters 115 anfahren. Die Abtastposition kann genau geplant sein oder es kann eine Abtastposition verwendet werden, die sich in einem vorbestimmten Bereich um die Position befindet, beispielsweise in einer vorbestimmten Maximalentfernung. Dann kann eine Abtastung des Fensters 115 durchgeführt werden.

In einem Schritt 260 kann die Abtastung auf der Basis zuvor gespeicherter Informationen ausgewertet werden, um den Zustand des Fensters 115 zu bestimmen. Dafür kann auf der Abtastung zunächst das Fenster 115 erkannt werden. Unter Umständen ist es erforderlich, ein vorbestimmtes Detail des Fensters 115 genauer zu untersuchen, beispielsweise eine vertikale Kante oder die Stellung eines Bedienhebels. In der Abtastung enthaltene Informationen können mit abgespeicherten Informationen verglichen werden, um den Zustand zu bestimmen. Liegt ein Ergebnis vor, so kann bestimmt werden, ob das Ergebnis mit ausreichend hoher Sicherheit bestimmt werden konnte bzw. ob es noch ein anderes mögliches Ergebnis gibt, sodass keine eindeutige Aussage über den Zustand getroffen werden kann. In diesem Fall kann das Verfahren 200 zurück verzweigen zum Schritt 255 und eine neue Abtastung, möglicherweise aus einer anderen Abtastposition, vornehmen.

Andernfalls kann das Ergebnis in einem Schritt 265 bereitgestellt werden, beispielsweise in Form einer Meldung an eine Person. Das Ergebnis kann auch auf andere Weise bereitgestellt werden, beispielsweise in maschinenlesbarer Form, um mittels eines anderen Systems weiterverarbeitet werden zu können. Optional kann in einem Schritt 270 versucht werden, ein Fenster 115, das als nicht geschlossen bestimmt wurde, mittels des Bodenroboters 105 zu schließen. Dazu kann der Bodenroboter 105 behutsam an das nicht geschlossene Fenster fahren und dann einen Kurs einschlagen, auf dem er das Fenster 115 in eine geschlossene Stellung schiebt.

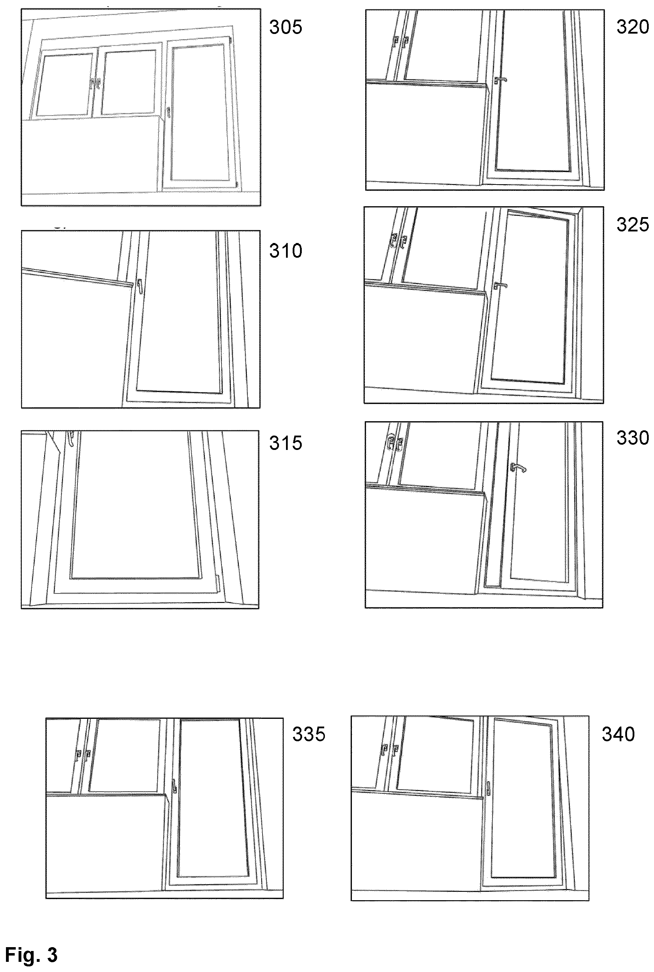

Figur 3 zeigt beispielhafte Abtastungen einer individuellen Tür 115 in einem Haushalt 110. Es ist zu verstehen, dass die individuelle Tür 115 stellvertretend für ein beliebiges individuelles Zugangselement 115 in einem Haushalt 110 steht. Die Abtastungen sind auf der Basis optischer Aufnahmen eines Bodenroboters 105 entstanden, der dazu im Bereich einer Position der individuellen Tür 115 eine Abtastposition auf der Bodenfläche 118 eingenommen hat.

Erste Abtastungen 305, 310 und 315 betreffen die individuelle Tür 115 in einem geschlossenen Zustand aus verschiedenen Abtastpositionen. Fugen rings um das Türblatt gegenüber einem Türrahmen sind geschlossen und von konstanter Breite. Ein Betätigungshebel befindet sich in einer im Wesentlichen vertikalen Stellung. An keiner Stelle ist ein Spalt an der individuellen Tür 115 erkennbar.

Zweite Abtastungen 320, 325 und 330 betreffen die individuelle Tür 115 in einem nicht geschlossenen Zustand. Der Betätigungshebel befindet sich in einer horizontalen Position, sodass erkannt werden kann, dass die individuelle Tür 115 nicht verriegelt ist. In der Abtastung 325 ist an einem oberen Ende des Türblatts zum Rahmen hin ein Spalt erkennbar. In der Abtastung 330 kann sogar links neben dem Türblatt hindurchgesehen werden.

Dritte Abtastungen 335, 340 betreffen die individuelle Tür 115 in einem teilweise geschlossenen Zustand, in welchem das Türblatt in vertikaler Richtung im Rahmen nach innen gekippt ist. Ob dieser Zustand als geschlossen oder als nicht geschlossen interpretiert wird, kann vorbestimmt sein. Der Betätigungshebel befindet sich in der vertikalen Position, sodass die individuelle Tür 115 in ihrem Zustand verriegelt ist. In der Abtastung 335 kann der gekippte Zustand kaum wahrgenommen werden. In der Abtastung 340 kann in einem oberen rechten Bereich des Türblatts erkannt werden, dass die Tür gegenüber dem Türrahmen gekippt ist.

Insgesamt ist festzuhalten, dass die Bestimmung des Zustands der individuellen Tür 115 das Erkennen der individuellen Tür 115 auf einer Abtastung 305-340, das Identifizieren eines vorbestimmten Merkmals der individuellen Tür 115, das Erkennen des Merkmals und/oder ein logisches Verknüpfen mit einem anderen erkannten Merkmal umfassen kann.

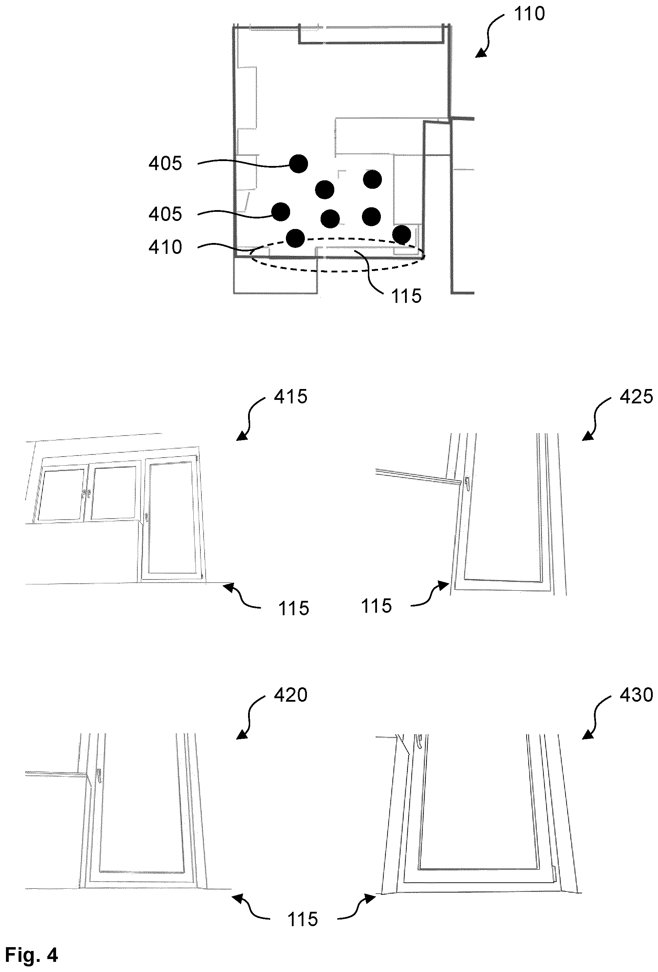

Figur 4 zeigt beispielhafte Abtastpositionen 405 in einem Haushalt 110 und Abtastungen einer individuellen Tür 115 in dem Haushalt 110 aus unterschiedlichen Abtastpositionen 405.

Bezüglich einer kartografischen Darstellung eines Abschnitts des Haushalts 110 wurde eine Position 410 der individuellen Tür 115 festgelegt, beispielsweise durch einen Benutzer des Systems 100. Naturgemäß schließt die individuelle Tür 115 einen Raum des Haushalts 110 ab. Auf einer Seite der individuellen Tür 115, auf der sich der Bodenroboter 105 befindet, sind verschiedene Abtastpositionen 405 bestimmt, die unterschiedliche Perspektiven auf die individuelle Tür 115 bieten und durch den Bodenroboter 105 erreichbar sind. Von diesen Abtastpositionen 405 aus kann die individuelle Tür 115 vorteilhaft abgetastet werden.

Vierte Abtastungen 415-430 betreffen jeweils die individuelle Tür 115 entweder in voller Höhe oder in einem unteren Ausschnitt bis zur Bodenfläche 118. Die Abtastungen 415-430 sind rein beispielhaft und nicht konkreten, im oberen Bereich eingezeichneten Abtastpositionen 405 zugeordnet. Es ist zu erkennen, wie unterschiedliche Abtastpositionen 405 einen starken Einfluss auf Größenverhältnisse und eine Verzerrung der abgetasteten individuellen Tür 115 haben. Außerdem kann ein Einfluss auf Lichtverhältnisse bei der Abtastung bestehen. Für eine gute Erkennung der individuellen Tür 115, eines Merkmals davon oder eines Zustands der individuellen Tür 115 kann es sinnvoll sein, eine Abtastposition 405 zu wählen, die eine klare Abbildung erlaubt und bevorzugt möglichst ähnlich zu einer Abtastposition 405 ist, die zum Lernen der individuellen Tür 115 verwendet wurde. Allerdings kann nicht jede wünschenswerte Abtastposition 405 eingenommen werden, beispielsweise weil eine Abtastposition 405 oder ein Blick von der Abtastposition 405 auf die individuelle Tür 115 durch ein Möbel verstellt ist.

### Bezugszeichen

- 100: System
- 105: Bodenroboter
- 110: Haushalt
- 115: Zugangselement, insbesondere Fenster oder Tür
- 118: Bodenfläche
- 120: Verarbeitungseinrichtung
- 125: Sensor
- 130: erster Speicher
- 135: zweiter Speicher
- 140: Kartenspeicher
- 145: drahtlose Schnittstelle
- 150: Interaktionseinrichtung

- 200: Verfahren
- 205: Angabe Position des Fensters
- 210: Fenster in erster Stellung
- 215: erste Abtastpositionen bestimmen
- 220: erste Abtastpositionen anfahren, Abtastungen anfertigen
- 225: Fenster in zweiter Stellung
- 230: zweite Abtastpositionen bestimmen
- 235: zweite Abtastpositionen anfahren, Abtastungen anfertigen
- 240: weitere Abtastung erforderlich?
- 245: Unterstützung anfordern, Abtastung anfertigen

- 250: Anforderung zur Überprüfung des Fensters empfangen
- 255: Abtastposition anfahren und Abtastung anfertigen
- 260: eindeutiges Ergebnis?
- 265: Meldung bereitstellen
- 270: Fenster schließen

- 305-315: erste Abtastungen
- 320-330: zweite Abtastungen
- 335, 340: dritte Abtastungen

- 405: Abtastpositionen
- 410: Position eines individuellen Zugangselementes
- 415-430: vierte Abtastungen

## Patentansprüche

1. Verfahren (200) zum Erkennen eines Zustands eines individuellen Zugangselements (115) zu einem Raum in einem Haushalt (110), wobei das individuelle Zugangselement (115) in einen offenen und in einen geschlossenen Zustand gebracht werden kann; wobei das Verfahren (200) folgende Schritte umfasst:
- Bestimmen (205) einer Position (410), an der sich ein individuelles Zugangselement (115) im Haushalt (110) befindet;
- berührungsloses Abtasten (220, 235, 245) des individuellen Zugangselements (115), während es sich in einem vorbestimmten Zustand befindet;
- Ablegen (220, 235, 245) von Informationen zum individuellen Zugangselement (115) auf der Basis seiner Abtastung und seines Zustands; **gekennzeichnet durch** die folgende Schritte:
- Erfassen (255) einer weiteren berührungslosen Abtastung des individuellen Zugangselements (115) im Haushalt (110); und
- Erkennen (260) eines Zustands des individuellen Zugangselements (115) auf der Basis der weiteren berührungslosen Abtastung sowie der abgelegten und der vorbestimmten Informationen.

2. Verfahren (200) nach Anspruch 1, wobei das Zugangselement (115) eine Tür oder ein Fenster umfasst.

3. Verfahren (200) nach Anspruch 1 oder 2, wobei das Zugangselement (115) mittels eines automatischen Bodenroboters abgetastet wird.

4. Verfahren (200) nach Anspruch 3, wobei die weitere Abtastung im Rahmen einer Reinigung einer Bodenfläche im Haushalt (110) erfasst (255) wird.

5. Verfahren (200) nach einem der vorangehenden Ansprüche, wobei ein bestimmter Zustand eines individuellen Zugangselements (115) im Haushalt (110) an eine Person außerhalb des Haushalts (110) bereitgestellt wird.

6. Verfahren (200) nach einem der vorangehenden Ansprüche, wobei auf der Basis der Position (410) des individuellen Zugangselements (115) eine Abtastposition (405) bestimmt wird, von der aus die Abtastung erfolgt.

7. Verfahren (200) nach Anspruch 6, wobei die Abtastposition (405) auf der Basis einer Umgebungskarte des Haushalts (110) bestimmt wird.

8. Verfahren (200) nach einem der vorangehenden Ansprüche, wobei die Informationen zum individuellen Zugangselement (115) separat von den Informationen zur Erkennung eines generischen Zugangselements (115) oder seines Zustands abgelegt werden.

9. Verfahren (200) nach einem der vorangehenden Ansprüche, wobei Informationen, die unterschiedlichen individuellen Zugangselementen (115) im Haushalt (110) zugeordnet sind, separat voneinander gespeichert werden.

10. Verfahren (200) nach einem der vorangehenden Ansprüche, wobei die Informationen zur Erkennung eines generischen Zugangselements (115) oder seines Zustands als trainiertes neuronales Netzwerk vorliegen.

11. Verfahren (200) nach einem der vorangehenden Ansprüche, wobei der Bodenroboter (105) dazu angesteuert wird, das individuelle Zugangselement (115) in den geschlossenen Zustand zu bringen (270), nachdem bestimmt wurde, dass dessen Zustand nicht geschlossen ist.

12. Bodenroboter (105), umfassend
- eine Einrichtung (150) zur Bestimmung einer Position (410), an der sich ein individuelles Zugangselement (115) im Haushalt (110) befindet;
- wobei das individuelle Zugangselement (115) in einen offenen und in einen geschlossenen Zustand gebracht werden kann;
- eine Abtasteinrichtung (125) zur berührungslosen Abtastung des individuellen Zugangselements (115), während es sich in einem vorbestimmten Zustand befindet;
- einen ersten Speicher (130) mit vorbestimmten Informationen zur Erkennung eines generischen Zugangselements (115) oder seines Zustands; **gekennzeichnet durch**:
- einen zweiten Speicher (135) zur Ablage von Informationen zum individuellen Zugangselement (115) auf der Basis seiner Abtastung und seines Zustands; und
- eine Verarbeitungseinrichtung (120), die dazu eingerichtet ist, einen Zustand des individuellen Zugangselements (115) im Haushalt (110) auf der Basis einer weiteren berührungslosen Abtastung und den vorbestimmten sowie den abgelegten Informationen zu erkennen.

13. Bodenroboter (105) nach Anspruch 12, wobei der Bodenroboter (105) dazu eingerichtet ist, eine Bodenfläche (118) im Haushalt (110) zu bearbeiten; und die weitere Abtastung des individuellen Zugangselements (115) im Rahmen einer Bearbeitung der Bodenfläche zu erfassen.

14. System (100), umfassend einen Bodenroboter (105) nach Ansprüchen 12 oder 13 und eine drahtlos mit der Verarbeitungseinrichtung (120) gekoppelte Interaktionseinrichtung (150) für einen Benutzer.

## Claims

1. Method (200) for identifying a state of an individual access element (115) to a room in a household (110), wherein the individual access element (115) can be brought into an open and into a closed state; wherein the method (200) comprises the following steps:
- determining (205) a position (410) at which an individual access element (115) is located in the household (110),
- contactless scanning (220, 235, 245) of the individual access element (115) while it is in a predetermined state;
- storing (220, 235, 245) information relating to the individual access element (115) on the basis of its scanning and its state; **characterised by** the following steps:
- detecting (255) a further contactless scanning of the individual access element (115) in the household (110); and
- identifying (260) a state of the individual access element (115) on the basis of the further contactless scanning and the stored and predetermined information.

2. Method (200) according to claim 1, wherein the access element (115) comprises a door or a window.

3. Method (200) according to claim 1 or 2, wherein the access element (115) is scanned by means of an automatic floor robot.

4. Method (200) according to claim 3, wherein the further scanning is detected (255) in the context of cleaning a floor surface in the household (110).

5. Method (200) according to one of the preceding claims, wherein a determined state of an individual access element (115) in the household (110) is provided to a person outside of the household (110).

6. Method (200) according to one of the preceding claims, wherein a scanning position (405), from which the scanning is taking place, is determined on the basis of the position (410) of the individual access element (115).

7. Method (200) according to claim 6, wherein the scanning position (405) is determined on the basis of a map of the surroundings of the household (110).

8. Method (200) according to one of the preceding claims, wherein the information relating to the individual access element (115) is stored separately from the information relating to the identification of a generic access element (115) or its state.

9. Method (200) according to one of the preceding claims, wherein information which is assigned to different individual access elements (115) in the household (110) is stored separately from one another.

10. Method (200) according to one of the preceding claims, wherein the information relating to the identification of a generic access element (115) or its state is present as a trained neural network.

11. Method (200) according to one of the preceding claims, wherein the floor robot (105) is activated in order to bring the individual access element (115) into the closed state (270) once it has been determined that its state is not closed.

12. Floor robot (105), comprising
- a facility (150) for determining a position (410) at which an individual access element (115) is located in the household (110);
- wherein the individual access element (115) can be brought into an open and into a closed state;
- a scanning facility (125) for contactless scanning of the individual access element (115) while it is in a predetermined state;
- a first memory (130) with predetermined information relating to the identification of a generic access element (115) or its state; **characterised by**:
- a second memory (135) for storing information relating to the individual access element (115) on the basis of its scanning and its state; and
- a processing facilty (120), which is designed to identify a state of the individual access element (115) in the household (110) on the basis of a further contactless scanning and the predetermined and the stored information.

13. Floor robot (105) according to claim 12,
wherein the floor robot (105) is designed to process a floor surface (118) in the household (110), and to detect the further scanning of the individual access element (115) in the context of processing the floor surface.

14. System (100), comprising a floor robot (105) according to claims 12 or 13 and an interaction facility (150), coupled wirelessly to the processing facility (120), for a user.

## Revendications

1. Procédé (200) de reconnaissance d'un état d'un élément d'accès (115) individuel à une pièce dans un foyer (110), dans lequel l'élément d'accès (115) individuel peut être mis dans un état ouvert et un état fermé ; dans lequel le procédé (200) comprend les étapes suivantes :
- détermination (205) d'une position (410) à laquelle se trouve un élément d'accès (115) individuel dans un foyer (110) ;
- balayage sans contact (220, 235, 245) de l'élément d'accès (115) individuel pendant qu'il se trouve dans un état prédéterminé ;
- stockage (220, 235, 245) d'informations sur l'élément d'accès (115) individuel sur la base de son balayage et de son état ; **caractérisé par** les étapes suivantes :
- recueil (255) d'un autre balayage sans contact de l'élément d'accès (115) individuel dans un foyer (110) ; et
- reconnaissance (260) d'un état de l'élément d'accès (115) individuel sur la base de l'autre balayage sans contact ainsi que des informations stockées et des informations prédéterminées.

2. Procédé (200) selon la revendication 1, dans lequel l'élément d'accès (115) comprend une porte ou une fenêtre.

3. Procédé (200) selon la revendication 1 ou 2, dans lequel l'élément d'accès (115) est balayé au moyen d'un robot de sol automatique.

4. Procédé (200) selon la revendication 3, dans lequel l'autre balayage est recueilli (255) dans le cadre d'un nettoyage d'une surface de sol dans un foyer (110).

5. Procédé (200) selon l'une des revendications précédentes, dans lequel un état prédéterminé d'un élément d'accès (115) individuel dans un foyer (110) est fourni à une personne se trouvant à l'extérieur du foyer (110).

6. Procédé (200) selon l'une des revendications précédentes, dans lequel sur la base de la position (410) de l'élément d'accès (115) individuel est déterminée une position de balayage (405) à partir de laquelle a lieu le balayage.

7. Procédé (200) selon la revendication 6, dans lequel la position de balayage (405) est déterminée sur la base d'une carte de l'environnement du foyer (110).

8. Procédé (200) selon l'une des revendications précédentes, dans lequel les informations sur l'élément d'accès (115) individuel sont stockées séparément des informations de reconnaissance d'un élément d'accès (115) générique ou de son état.

9. Procédé (200) selon l'une des revendications précédentes, dans lequel des informations qui sont affectées à des éléments d'accès (115) individuels différents dans un foyer (110), sont enregistrées séparément les unes des autres.

10. Procédé (200) selon l'une des revendications précédentes, dans lequel les informations de reconnaissance d'un élément d'accès (115) générique ou de son état existent en tant que réseau neuronal entraîné.

11. Procédé (200) selon l'une des revendications précédentes, dans lequel le robot de sol (105) est commandé pour amener (270) l'élément d'accès (115) individuel dans l'état fermé après qu'il a été déterminé que son état n'est pas fermé.

12. Robot de sol (105), comprenant
- un dispositif (150) de détermination d'une position (410) à laquelle se trouve un élément d'accès (115) individuel dans un foyer (110) ;
- dans lequel l'élément d'accès (115) individuel peut être amené dans un état ouvert et dans un état fermé ;
- un dispositif de balayage (125) pour le balayage sans contact de l'élément d'accès (115) individuel, pendant qu'il se trouve dans un état prédéterminé ;
- une première mémoire (130) avec des informations prédéterminées pour la reconnaissance d'un élément d'accès (115) générique ou de son état ;
**caractérisé par**
- une deuxième mémoire (135) pour le stockage d'informations sur l'élément d'accès (115) individuel sur la base de son balayage et de son état ; et
- un dispositif de traitement (120) qui est configuré pour reconnaître un état de l'élément d'accès (115) individuel dans un foyer (110) sur la base d'un autre balayage sans contact et des informations prédéterminées et des informations enregistrées.

13. Robot de sol (105) selon la revendication 12, dans lequel le robot de sol (105) est configuré pour traiter une surface de sol (118) dans un foyer (110) ; et pour recueillir l'autre balayage de l'élément d'accès (115) individuel dans le cadre d'un traitement de la surface de sol.

14. Système (100), comprenant un robot de sol (105) selon les revendications 12 ou 13 et un dispositif d'interaction (150) pour un utilisateur, couplé sans fil au dispositif de traitement (120).
